# EUROPEAN PATENT SPECIFICATION

(11) **EP 1 131 383 B1**
(45) Date of publication and mention of the grant of the patent: **15.10.2003**
(21) Application number: 99946534.7
(22) Date of filing: 27.08.1999
(51) Int. Cl.: C08L 5/00, G01N 30/00, B01D 15/00

(54) **COMPOSITE MATERIAL AND ITS USE**
VERBUNDWERKSTOFF UND VERWENDUNG DAVON
MATIERE COMPOSITE ET SON UTILISATION

(30) Priority: 28.08.1998 SE 9802882
(43) Date of publication of application: 12.09.2001
(73) Proprietor: Amersham Biosciences AB, 751 84 Uppsala (SE)
(72) Inventor: LARSSON, Per-Olof, S-226 53 Lund (SE); GUSTAVSSON, Per-Erik, S-224 76 Lund (SE)
(74) Representative: Rollins, Anthony John
(86) International application number: SE9901484
(87) International publication number: WO00012618

(56) References cited:
- WO-A1-93/19115
- US-A- 4 169 804
- DATABASE WPI Week 9521, Derwent Publications Ltd., London, GB; AN 95-158047, XP002948064 'Composite Absorbent Used for Carrier of Liquid Chromatography- Where Capacity pf Ion Exchange, and Satd. Adsorption of Albumin are Specific Values' & JP 7 080 294 A (MITSUBISHI KASEI CORP) 28 March 1995
- KHAYYAMI MASOUD ET AL: 'Development of an Amperometric Biosensor Based on Acetylcholine Esterase Covalently Bound to a New Support Material' TALANTA vol. 45, no. 3, January 1998, USA, pages 557 - 563, XP002921908

## Description

### Field of the invention

The invention relates to a composite material which is comprised of super-porous polysaccharide material of the type which has been previously described in WO-A-9319115 (US-A-5,723,601).

Porous polysaccharide material contains two types of pores. Partly pores with a small diameter (often less than 0.05 micrometers, micro-pores) where mass transportation occurs by diffusion when a liquid is transported through the material. Partly large pores - super-pores - in which mass transportation can take place through a convective flow when the pores are open. The part of the material that lies outside the super-pores is called the gel phase and consequently contains the micro-pores.

We have described super-porous agarose matrices in a series of articles. See Gustavsson et al., J. Chromatog. A 734 (1996) 231-240, Gustavsson et al., J. Chromatog. A 776 (1997) 197-203, Gustavsson et al., J. Chromatog. A 795 (1998) 199-210.

It is known in the prior art to place super-porous agarose in the pores of highly porous electrically conductive material (reticulated vitreous carbon, RVC) in order to increase the material's capacity to carry affinity-bonding ligands. See Khayyami, Thesis "Biosensors and chromatographic supports based on new combinations of conductive material", Lund University, Lund (1996). Their fields of use have been as biosensors or as chromatography adsorbents that should be able to be electroeluted. Agarose alone is unusable in the current type of biosensors and for electroelution. By electroelution is meant that a bonding ligand is oxidised/reduced in an electrochemical way to be non-bonding so that elution is made possible.

Unfortunately it has not yet been possible to completely use super-porous polysaccharide material in the way that would be desirable. Consequently one often wishes that the matrices characteristics would be better with respect to physical stability (pressure resistance), separation characteristics with respect to discriminating between substances with different molecular weights and geometric shape, stability of the affinity ligands which are linked to a super-porous matrix etc. It can especially be mentioned that certain applications, especially those that require matrices in particular shapes, require a density that more or less strongly deviates from 1 g/cm³.

Previous publications, such as WO-A-9319115 (US-A-5,723,601), have been relatively scarce about deficiences of super-porous polysaccharide material and how to overcome these deficiencies. To our knowledge previous publications, such as WPI/Derwent AN 95-158047 relating to composite polysaccharide material do not discuss the presence of super-pores therein.

We have now discovered that it is very easy to manufacture composite materials in which a super-porous polysaccharide matrix is included as the main component of the material and that this can offer advantages with respect to the above-mentioned deficiencies of prior art super-porous polysaccharides.

### The invention

A first aspect of the invention is a composite material that comprises two or more components. The composite is characterised in that one of the components is a super-porous polysaccharide material (main component). Other components are called secondary components (secondary components 1, 2, 3 etc). A composite material that comprises super-porous agarose and reticulated vitreous carbon (RVC) is not part of the invention.

The composite material can be in the form of fibres, balls (beads, particles), or a monolith. As an example of a monolith can be mentioned membranes or a cast continuous chromatographic bed. With matrices in the shape of balls one often speaks of sizes in the intervals of 0.1 - 1000 µm, such as 1-1000 µm or 5-500µm.

### The main component (super-porous polysaccharide material)

Typically super-porous polysaccharide materials are often manufactured starting from agar, agarose, alginate, dextran, carageenan, chitosan, cellulose or starch. Which material is chosen in the actual case is often determined by the characteristics that one wishes that the final product shall have with respect to pore size, charge, stability in different media, cost etc. The super-porous polysacharide material may be a homogeneous mixture of different polysaccharides forming the gel phase of the material. Super-porous polysaccharide material for use in the invention can be made in the same way as stated in WO-A-9319115.

The term super-pores means that a flow which can give convective mass transport should be able to be applied through the pores. This means as a rule that there shall be pores with diameters which are in the interval of 0.5-1000 µm, with a preferred interval of between 1-1000 µm. For matrices in the shape of particles which are packed to form a bed there is furthermore a condition that the relationship between super-pore diameter and the particle diameter is in the interval of 0.01-0.3, with a preference for 0.05-0.2.

The amount of the main component in the composite material of the invention can vary within extremely wide limits. Based on dry weight the amount of main component can consequently vary from just over 0% to just under 100%, such as 0.01-99.99% (w/w). Based on volume and measured on composite material saturated with water the main component can form 5-99.99%, for example 50-99% (v/v).

### Secondary components

The secondary components of the composite material can be a) particles which are enveloped in the main components gel phase and/or in the super-pores, or b) a continuous phase in the super-pores, or c) polymer chains which are homogeneously mixed in the gel phase with the main component's polysaccharide. In the variant a) there are particles which are coated with super-porous polysaccharide material. In the variant b) there is a macro-porous secondary component completely surrounding the super-porous polysaccharide material.

The secondary components differ from the main components with respect to at least one characteristic. The secondary components can be selected from different organic and inorganic material. They can be polymers with a completely synthetic origin or be based on so-called biopolymers, for example polysaccharides of the same or different types than those that are current as the main component. They can be derivitated to carry different groups that can be used during the use of the composite material of the invention. In the composite material of the invention a secondary component can be present as a solid substance or fluid and is as a rule insoluble in water (in the absence of additives that change its solubility).

A secondary component can be porous. If a secondary component is porous then its average pore diameter (in the composite material) can be larger than or smaller than or the same as the average pore diameter of the micro-pores in the main component's gel phase.

The secondary components can have a density that more or less greatly differs from 1 g/cm³.

As examples of the great variability which applies to the secondary components reference can be made to WO-A-9200799. One can also mention the following functions that can be introduced into the composite via a secondary component:
- density, for example particles with high or low density.
- magnetic attraction, for example particles of magnetite.
- affinity functions, described more closely in the following section.
- mechanical stability, for example polymers, particles or continuous structures such as reticulated vitreous carbon (RVC).
- thermal stability, for example polymers or other reagents which stabilise the melting point of main component 1.
- photo-chemical stability, for example the addition of coloured particles.
- microbial stability, for example polymers which prevent the entry of micro-organisms/hydrolytic enzymes.
- electrical conductivity, for example electrically conductive polymers, in particulate or monolithic form Particularly the case that an electrically conducting secondary component is monolithic and connected between two electrodes is not included in the composite in accordance with the invention.
- pore size modification, for example polymer networks which reduce the size of the super-pores in the main component.
- Heat conductivity, for example particles or heat conducting structures such as reticulated vitreous carbon, which can rapidly remove or add heat.
- Variable composite material characteristics, for example via so-called smart polymers. Smart polymers are polymers which dramatically can change their characteristics as a result of an outside stimulus. An example is to introduce a thermo-responsive smart polymer into the super-pores and thereby make these variably permeable via small temperature changes.

### Derivitated forms of the composite material of the invention

The composite material of the invention can be provided with so called affinity ligands which are bonded to the main components and/or to one or more of the secondary components of the composite material. As examples of affinity ligands can be mentioned anion- or cation exchange groups, amphiphilic groups, chelating groups, bio-affine groups, groups which can be used in covalent chromatography, groups which give π-π interaction, groups which can be used during hydrophobic interaction chromatography, groups which give thiophilic interactions etc. A special kind is affinity ligands are present on affinity bonding inorganic material for example hydroxyapatite, etc.

The different components in the composite material of the invention can, when they are based on polymers, be cross-linked in a way that is in itself known.

Cross-linking and the introduction of affinity ligands can take place in the finished composite material or in the respective main component before the composite material is made.

It is evident above that the cross-linking structures, the introduced ligands and other binding structures which occur through chemical derivatisation of a base material are not called secondary components in connection with the invention.

### Manufacturing of the composite material of the invention

The composite material in accordance with the invention can be made through first making a solution of the polysaccharide which is to be the main component in the finished composite material and suspending particles of the secondary components 1, 2, 3 etc. in the solution and thereafter proceeding as is known from the manufacturing of super-porous polysaccharide material in accordance with WO-A-9319115. It is essential to make sure that the secondary components 1, 2, 3 etc. do not sediment out during the manufacturing process.

A composite in accordance with the invention can even be manufactured through a) starting from super-porous polysaccharide material (the main component) manufactured in accordance with WO-A-9319115 and introducing secondary components 1, 2, 3 etc. into the super-pores, or b) starting from a macro-porous secondary component and manufacturing the super-porous polysaccharide material (main component) in the pores of the macro-porous secondary component.

### The field of use of the invention

The composite material in accordance with the invention has potentially the same area of use as other previously known porous materials. Some actual areas are, amongst others, in connection with separations, cell-culturing, bio-reactors and chemical synthesis. Examples of actual bio-reactors are, amongst others, enzyme reactors and other reactors where the catalyst is bound to a matrix. Examples of actual chemical syntheses are the synthesis of polymer in the solid phase, such as oligopeptides and oligonucleotides. During cell cultering the cells can be grown on the composite material of the invention.

By separation is meant first of all separations based on the affinity between the substance which is to be separated and a structure (ligand) on the matrix of the invention or based on differences in geometric shape and molecular weight between different substances. These separations can take place in the form of chromatographic or stepwise methods or methods which are based upon membrane technology. According to the first variation a solution containing the substances which are to be separated from each other is passed through a bed which contains the composite material of the invention. The bed can be in the shape of a porous monolithic matrix, packed particles or a so-called expanded bed (see WO-A-9218237). During stepwise methods the composite material of the invention is in the shape of particles which are suspended in a solution which contains the substances which are to be separated from each other.
Elution/desorption/freeing of the bonded substances can then, amongst others, take place through the addition of solutions that interrupt the bonds between the ligand and the bonded substance. Depending on the type of ligand the solution can contain desorbing agents that give an increased ion strength, a changed pH or which directly compete with the bonding between the ligand and the bonded substance. Electroelution which uses a composite material with a monolithic electrically conducting secondary-component which is connected between two electrodes in combination with electroelution is not included in the method aspect of the invention.

In principle, beds constructed in a similar way can be used during cell-culture, chemical synthesis and in bio-reactors.

The invention is defined furthermore by the accompanying claims and will now be illustrated with a number of non-limiting examples.

### EXPERIMENTAL PART

In this experiment we have started from the examples which were given in the International Patent Application WO-A-9319115.

### Example 1. Monolithic composite material. Continuous super-porous membrane with filler in the gel-phase.

- 10 ml of a 6% agarose solution was made in accordance with example 1 in WO-A-9319115 (solution A).
- 10 ml cyclohexane + 1 ml Tween-80 manufactured in accordance with example 1 in WO-A-9319115 (solution B)
- 10 ml filler was heated to 60°C (solution C).

Solution A and solution C were combined while being stirred at 60°C. Thereafter solution B was added while being stirred (1000 rpm) at 60°C in order to obtain emulsion 1 in the same way as described in WO-A-93 19115. From emulsion 1 super-porous continuous composite membranes were made in accordance with example 4 in WO-A-9319115.

The following alternative filler was used:
a. Anion exchanger, AG 1X-8 minus 400 mesh (Bio-Rad Laboratories, U.S.A.). The resulting composite material was shown to function through the determination of break-through curves for ATP.
b. Silica material LiChroprep Si 100, 40-63 µm (E. Merck Darmstadt, Germany).
c. Agarose spheres (6% Agarose 25-75 µm) derivatised with Cibacron-blue. These agarose spheres were manufactured in accordance with Gustavsson and Larsson, J. Chromatography A, 734 (1996) 231-240, but with a stirring speed of 1500 rpm.
d. Graphite, powder synthetic, 1-2 µm (Aldrich, U.S.A.). In this case 20 ml of 6% agarose solution and 2.5 ml of graphite powder were used.

### Example 2. Composite material in the shape of spheres/beads. Super-porous agarose beads having super-pores in which a low percentage agarose solution was cast.

The following super-porous agarose spheres were manufactured in accordance with WO-A-9319115 using as starting material:
1. Agarose content 6%, particle sizes 300-500 µm, super-pore volume 40%, super-pore diameter 30 µm.
2. Agarose content 6%, particle sizes 106-180 µm, super-pore volume 40%, super-pore diameter 30 µm.

These super-porous agarose spheres were used in order to manufacture composite material through filling the super-pores with 0.5% agarose in accordance with the following:
- The interstitial water of 20 ml sedimented super-porous agarose beads was filtrated off in a Büchner filter and the super porous agarose beads transferred to an E-flask. The E-flask was heated to 50°C in a thermostat controlled water bath (gel A).
- 0.5 g agarose (low gelling temperature, Sigma A-4018) was added to 100 ml distilled water and heated to 95-100°C in a microwave oven. The agarose solution was tempered down to 50°C in a thermostat controlled water bath (solution B).
- Solution B was added to gel A and placed in a vibrating water bath (50°C) for 22 hours (suspension C).
- 200 ml of cyclohexane + 5.6 g Span-85 (Fluka, Buchs, Switzerland) were tempered to 50°C in a stirred tank reactor. Suspension C was added to the tank reactor (50°C) while being stirred (1500 rpm). After 1 minute the temperature in the tank reactor was lowered to 5°C with continued stirring (1500 rpm).

In the final stage the desired composite material was formed, that is to say super-porous agarose beads with 0.5% agarose in the super-pores and normal agarose beads with an agarose content of 0.5%. The latter could be easily separated through sedimentation.

### Functional testing of the agarose composite beads (6% - 0.5% agarose):

The above manufactured composite beads were packed in chromatography columns and used for gel filtering. These composite beads could separate latex particles (0.5 µm) and Blue Dextran MW 2 000 000, which were eluted at the same time during gel filtering experiments with columns packed with normal agarose beads or super-porous agarose beads. The explanation is that Blue Dextran 2 000 000 has access to the super-pore volume while the latex particles does not have access to the volume because they are excluded from 0.5% agarose pores. This type of composite bead can be used for increasing the separation area for DNA during gel filtration.

### Example 3. Composite material in the shape of beads. Super-porous agarose/polyacrylamide beads.

**Comment.** In this composite the gel phase itself consist of cross-linked polyacrylamide + agarose.
- 0.0625 g N,N'-methylene-bis-acrylamide was dissolved in 25 ml 10% acrylamide. The solution was vacuum-degassed and tempered to 60°C (solution A).
- 2.4 g agarose was dissolved in 30 ml vacuum-degassed water and heated in a microwave oven to 95-100°C. The agarose solution was tempered to 60°C in a stirred tank reactor (solution B).
- 25 ml cyclohexane with 1.5 ml Tween-80 was degassed with nitrogen and tempered to 60°C (solution C).
- 150 ml cyclohexane with 8.4 g Span 85 was degassed with nitrogen and tempered to 60°C (solution D).

The solution A was mixed into the solution B while being stirred (500 rpm, 15 min) at 60°C (solution E). 0.05 ml TEMED and 30 mg ammonium persulphate was separately dissolved in a small quantity of degassed water and added to the solution E while being stirred (500 rpm, 2 min). The solution C was added to the solution E and emulsified at 100 rpm for 0.5 min. The solution D was added to solution E and emulsified at 500 rpm for 1 minute, thereafter being cooled to 25°C. Stirring continued for 30 minutes at 500 rpm.

The gel beads obtained were washed as described in WO-A-9319115.

### Example 4. Monolithic composite material based on super-porous agarose and yeast cells.

A composite was manufactured in accordance with example 1. 10 ml of 50% content yeast suspension (bakers yeast) was used as a secondary component. The finished composite was investigated and found to have enzymatic activity (alcohol dehydrogenase activity).

### Example 5. Composite material in the shape of beads. Ion-exchange matrix.

- 10 ml 2-6% agarose solution was made (60°C). To the solution was added a sodium alginate solution (4% w/v) to a final concentration of 0.25-1% (w/v) (solution A).
- 10 ml cyclohexane + 0.6 ml Tween-80 were heated to 60°C (solution B).
- 50 ml cyclohexane + 2 g Span 85 were heated to 60°C (solution C).
- The solution B was added to solution A and stirred at 1000 rpm for 2 minutes at 60°C (solution D).

Super-porous alginate-agarose beads were manufactured in accordance with the following two methods:
Method 1: Solution D was added to solution C in a stirred reactor tank (600 rpm, 60°C). The agarose was allowed to solidify after 1 minute by cooling the reactor tank to 25°C. The alginate in the agarose phase was polymerised through a CaCl₂-water solution (small volume) being added to the reactor and while being stirred just before or just after the cooling.
Method 2: The solution D was added drop-wise with a Pasteur pipette down in a heated beaker (60°C). The beaker contained two phases. The top phase consisted of solution C. The bottom phase consisted of 1.5% CaCl₂ in water. The beaker was stirred with a magnetic stirrer without the phases being mixed. The composite material made was washed with water, ethanol-water (1:1) and water.

### Example 6. Monolithic agarose-hydroxyl apatite composite material.

25 ml sedimented hydroxyl apatite in 1 mM sodium phosphate buffer went through a series of sedimentations under which the smallest particles (in total 9 ml of the sedimented hydroxyl apatite) were removed. 5 ml sedimented volume of the hydroxyl apatite which was left (1mM sodium phosphate buffer pH 6.8) was heated with a thermostat control to 60°C. 20 ml of an agarose solution (8% w/v) was made through heating for one minute a suspension of agarose in water to 95-100°C in a microwave oven. During the heating the agarose powder was maintained well suspended through occasional shaking. The agarose solution was heated to 60°C using a thermostat control whereafter 15 ml was added to the thermostat temperature-controlled hydroxyl apatite. The solution with the agarose-hydroxyl apatite was stirred then at 1000 revolutions per minute in a thermostat controlled water bath (60°C). After 5 minutes a mixture of 0.75 ml Tween-80 and 10 ml cyclohexane (60°C was added). The mixture was emulsified through stirring at 1000 revolutions per minute for two minutes. The emulsion was poured into glass columns (16 mm inside diameter) which were held at a thermostat controlled temperature of 60°C in a water bath. After 30 seconds the glass columns were transferred to an ice-bath in order to be cooled. The insoluble continuous beds (containing hydroxyl apatite) which were obtained were trimmed to a length of 1.4 cm and placed in glass columns (16 mm ID) which were equipped with flow adapters. The organic phase in the super-pores was removed through pumping sodium phosphate buffer pH 6.8, ethanol-1 mM sodium phosphate buffer pH 6.8 (50:50 v/v) and finally sodium phosphate buffer pH 6.8 through the column. The composite bed was stored at 4°C until it was used.

The columns were then connected to an HPLC-system (Amersham Pharmacia Biotech AB; Uppsala, Sweden) including pumps, injection valves, UV-Vis detector and printer. Separation of three model proteins (lysozyme, cytochrome c and bovine serum albumine) were then studied with three different flow speeds (15 cm/h, 30 cm/h, 60 cm/h). The composite bed had a super-pore/interstitial porosity of 33% (defined by the method of production) and a super-pore/interstitial average pore diameter of 30 µm (measured through observation in a microscope).

## Claims

1. A composite separation material, **characterized in that** it comprises two or more components of which one is a super-porous polysaccharide (main component) comprising super-pores and micro-pores and the other component(s) (secondary component(s)) are different from the main component, with exception of the case where the composite comprises superporous agarose and reticulated vitreous carbon (RVC).

2. The composite material according to claim 1, **characterized in that** the main component is in the shape of discrete particles or a continuous structure.

3. The composite material according to any of claims 1-2, **characterized in that** at least one of the secondary components is outside the super-pores but inside the main component's gel phase.

4. The composite material according to any of claims 1-2, **characterized in that** at least one of the secondary components is in the super-pores of the main component.

5. The composite material according to any of claims 1-2, **characterized in that** at least one of the secondary components is present in both the super-pores and in the gel phase of the main component.

6. The composite according to any of claims 1-5, **characterized in that** it has at least one affinity ligand.

7. The composite material according to claim 6, **characterized in that** the respective affinity ligand is linked to the main component and/or to one or more secondary components.

8. The composite material according to claim 6, **characterized in that** at least one of the affinity ligands is linked to the main component.

9. The composite material according to claim 6, **characterized in that** at least one of the affinity ligands is connected to one of the secondary components.

10. The composite material according to any of claims 6-9, **characterized in that** said at least one of the affinity ligands is an ion exchange group, amphoteric group, chelating group, bio affine group, a group which can be used in covalent chromatography, a group which gives π-π-interaction, a group which can be used during hydrophobic interactions chromatography, a group which give thiophilic interactions, or an affinity binding inorganic material which is a secondary component, such as hydroxyapatite.

11. The composite material according to any of claims 1-10, **characterized in that** the secondary components are porous with average pore diameters which are greater than the average pore diameters in the gel phase of the main component.

12. The composite material according to any of claims 1-11, **characterized in that** it is in the shape of fibres, beads, or a monolith, such as a membrane or a bed.

## Patentansprüche

1. Komposit-Trennmaterial, **dadurch gekennzeichnet, dass** es zwei oder mehr Komponenten umfasst, von denen eine ein superporöses Polysaccharid (Hauptkomponente) ist, umfassend Superporen und Mikroporen, und die andere Komponente(n) (sekundäre Komponente(n)) von der Hauptkomponente verschieden ist (sind), mit Ausnahme des Falles, wo das Komposit superporöse Agarose und retikulierten glasartigen Kohlenstoff (RVC) umfasst.

2. Kompositmaterial nach Anspruch 1, **dadurch gekennzeichnet, dass** die Hauptkomponente in Form diskreter Teilchen oder einer kontinuierlichen Struktur vorliegt.

3. Kompositmaterial nach mindestens einem der Ansprüche 1-2, **dadurch gekennzeichnet, dass** mindestens eine der sekundären Komponenten außerhalb der Superporen, jedoch innerhalb der Gelphase der Hauptkomponente vorliegt.

4. Kompositmaterial nach mindestens einem der Ansprüche 1-2, **dadurch gekennzeichnet dass** mindestens eine der Komponenten in den Superporen der Hauptkomponente vorliegt.

5. Kompositmaterial nach mindestens einem der Ansprüche 1-2, **dadurch gekennzeichnet, dass** mindestens eine der sekundären Komponenten sowohl in den Superporen als auch in der Gelphase der Hauptkomponente vorliegt.

6. Komposit nach mindestens einem der Ansprüche. 1-5, **dadurch gekennzeichnet, dass** es mindestens einen Affinitätsliganden aufweist.

7. Kompositmaterial nach Anspruch 6, **dadurch gekennzeichnet, dass** der betreffende Affinitätsligand an die Hauptkomponente und/oder an eine oder mehrere sekundäre Komponenten gebunden ist.

8. Kompositmaterial nach Anspruch 6, **dadurch gekennzeichnet, dass** mindestens einer der Affinitätsliganden an die Hauptkomponente gebunden ist,

9. Kompositmaterial nach Anspruch 6, **dadurch gekennzeichnet, dass** mindestens einer der Affinitätslliganden an eine der sekundären Komponenten gebunden ist.

10. Kompositmaterial nach mindestens einem der Ansprüche 6-9, **dadurch gekennzeichnet, dass** mindestens einer der Affinitätsliganden eine lonenaustauschgruppe, amphotere Gruppe, Chelatbildungsgruppe, bioaffine Gruppe, eine Gruppe, welche in der Kovalent-Chromatographie verwendet werden kann, eine Gruppe, welche π-π-Wechseiwirkung ergibt, eine Gruppe, welche während der Chromatographie mit hydrophoben Wechselwirkungen verwendet werden kann, eine Gruppe, welche thiophile Wechselwirkungen ergibt, oder ein anorganisches Affinitäts-Bindungsmaterial, das eine sekundäre Komponente ist, wie Hydroxylapatit, ist.

11. Kompositmaterial nach mindestens einem der Ansprüche 1-10, **dadurch gekennzeichnet, dass** die sekundären Komponenten porös sind mit Durchschnittsporendurchmessern, welche größer sind als die Durschnittsporendurchmesser in der Gelphase der Hauptkomponente.

12. Kompositmaterial nach mindestens einem der Ansprüche 1-11, **dadurch gekennzeichnet, dass** es in Form von Fasern, Kügelchen oder als Monolith, wie eine Membran oder ein Bett, vorliegt.

## Revendications

1. Matériau de séparation composite, **caractérisé en ce qu'**il comprend deux composants ou plus, dont l'un est un polysaccharide superporeux (composant principal) comprenant des superpores et des micropores et le ou les autres composants (composant(s) secondaire(s)) sont différents du composant principal, sauf dans le cas où le composite comprend de l'agarose superporeux et du carbone vitreux réticulé (RCV).

2. Matériau composite selon la revendication 1, **caractérisé en ce que** le composant principal est sous forme de particules discrètes ou d'une structure continue.

3. Matériau composite selon l'une quelconque des revendications 1-2, **caractérisé en ce qu'**au moins un des composants secondaires est à l'extérieur des superpores mais à l'intérieur de la phase de gel du composant principal.

4. Matériau composite selon l'une quelconque des revendications 1-2, **caractérisé en ce qu'**au moins un des composants secondaires est dans les superpores du composant principal.

5. Matériau composite selon l'une quelconque des revendications 1-2, **caractérisé en ce qu'**au moins un des composants secondaires est présent dans les superpores et dans la phase de gel du composant principal.

6. Composite selon l'une quelconque des revendications 1-5, **caractérisé en ce qu'**il a au moins un ligand d'affinité.

7. Matériau composite selon la revendication 6, **caractérisé en ce que** le ligand d'affinité respectif est lié au composant principal et/ou à un ou plusieurs composants secondaires.

8. Matériau composite selon la revendication 6, **caractérisé en ce qu'**au moins un des ligands d'affinité est lié au composant principal.

9. Matériau composite selon la revendication 6, **caractérisé en qu'**au moins un des ligands d'affinité est connecté à un des composants secondaires.

10. Matériau composite selon l'une quelconque des revendications 6-9, **caractérisé en ce que** ledit au moins un des ligands d'affinité est un groupe d'échange d'ions, un groupe amphotère, un groupe chélatant, un groupe bioaffine, un groupe qui peut être utilisé dans une chromatographie covalente, un groupe qui donne une interaction π-π, un groupe qui peut être utilisé pendant une chromatographie d'interactions hydrophobes, un groupe qui donne des interactions thiophiles, ou un matériau inorganique de liaison d'affinité qui est un composant secondaire, tel que l'hydroxyapatite.

11. Matériau composite selon l'une quelconque des revendications 1-10, **caractérisé en ce que** les composants secondaires sont poreux avec des diamètres de pores moyens qui sont plus grands que les diamètres de pores moyens dans la phase de gel du composant principal.

12. Matériau composite selon l'une quelconque des revendications 1-11, **caractérisé en ce qu'**il est sous la forme de fibres, de billes ou d'un monolithe, tel qu'une une membrane ou un lit.
